# FASCICULE DE BREVET EUROPEEN

(11) **EP 1 676 751 B1**
(45) Date de publication et mention de la délivrance du brevet: **09.03.2011**
(21) Numéro de dépôt: 05292806.6
(22) Date de dépôt: 27.12.2005
(51) Int. Cl.: B60R 13/02, B60Q 3/02

(54) **Garniture interne d'une partie de la carosserie d'un véhicule automobile dans laquelle est intégré un moyen d'éclairage**
Innenverkleidung eines Teils einer Kraftfahrzeugkarosserie mit eingebauten Leuchtmitteln
Internal garnishing of a vehicle body part with incorporated lighting means.

(30) Priorité: 31.12.2004 FR 0414122
(43) Date de publication de la demande: 05.07.2006
(73) Titulaire: Peugeot Citroën Automobiles SA, 78140 Vélizy-Villacoublay (FR); Treves S.A., 75008 Paris (FR); Hella KGaA Hueck & Co., 59552 Lippstadt (DE)
(72) Inventeur: Barre, Philippe, 94340 Joinville Le Pont (FR); Bonfils, Xavier, 51100 Reims (FR); Serres, David, 51420 Witry Les Reims (FR); Tarallo, Jean-Michel, 75016 Paris (FR); Mueller, Bernd, 79650 Schopfheim (DE); Schoene, Heiko, 79677 Schönau (DE); Zwick, Hubert, 70173 Stuttgart (DE)
(74) Mandataire: Lagrange, Jacques Etienne M.M.

(56) Documents cités:
- DE-A1- 10 026 385
- US-A- 4 670 819
- US-A- 6 158 882
- US-A1- 2004 062 054
- PATENT ABSTRACTS OF JAPAN vol. 1997, no. 07, 31 juillet 1997 (1997-07-31) & JP 09 086273 A (MAZDA MOTOR CORP), 31 mars 1997 (1997-03-31)
- PATENT ABSTRACTS OF JAPAN vol. 2000, no. 08, 6 octobre 2000 (2000-10-06) & JP 2000 142218 A (NISSAN MOTOR CO LTD), 23 mai 2000 (2000-05-23)

## Description

L'invention concerne une garniture interne d'une partie de la carrosserie d'un véhicule automobile dans laquelle est intégré un moyen d'éclairage intérieur du véhicule automobile.

Les véhicules automobiles comportent généralement un habitacle qui est délimité par des parties de carrosserie du véhicule et en particulier par des parties de carrosserie ayant une disposition sensiblement verticale délimitant latéralement l'habitacle du véhicule. De telles parties de carrosserie peuvent être des parties mobiles telles que des portes ou des parties fixes, par exemple des montants latéraux de l'habitacle.

L'habitacle d'un véhicule automobile doit comporter des moyens d'éclairage intérieur qui permettent de réaliser différentes fonctions. En particulier, il est nécessaire de disposer de moyens d'éclairage ayant une intensité suffisante pour permettre au conducteur du véhicule ou à des passagers d'examiner avec attention des objets ou des documents et en particulier de lire des documents, plus particulièrement pendant des arrêts du véhicule automobile. Un tel éclairage est généralement désigné comme éclairage de lecture à l'intérieur du véhicule automobile.

Il est également nécessaire de disposer de moyens permettant au conducteur ou aux passagers du véhicule automobile d'accéder facilement au poste de conduite ou à un siège de passager, après ouverture d'une porte du véhicule. De tels moyens permettent habituellement d'éclairer le côté latéral du véhicule automobile par lequel le conducteur ou le passager pénètre dans le véhicule automobile, en particulier au niveau du plancher de l'habitacle, ainsi qu'au moins une partie du siège qui doit être occupé par le conducteur ou le passager. Un tel moyen d'éclairage est généralement appelé éclairage d'accueil.

L'éclairage intérieur du véhicule automobile peut comporter également un éclairage d'ambiance diffusant une lumière à faible intensité, pratiquement dans toute la surface de l'habitacle.

L'un des moyens d'éclairage intérieur des véhicules automobiles les plus courants est constitué par un plafonnier situé au niveau supérieur de l'habitacle et généralement dans la partie antérieure de l'habitacle.

Un tel moyen classique est peu approprié pour accomplir les fonctions de lecture et d'accueil.

En outre, un tel éclairage en partie supérieure de l'habitacle peut être éblouissant pour le conducteur et les passagers.

En particulier, dans le cas des véhicules décapotables de type cabriolet, un système d'éclairage intérieur comportant uniquement des moyens d'éclairage en partie supérieure de l'habitacle est peu approprié.

On a donc proposé de disposer des moyens d'éclairage intérieur de l'habitacle, à mi-hauteur de l'habitacle. De tels moyens d'éclairage peuvent être disposés dans une partie de carrosserie délimitant latéralement l'habitacle, telle qu'une porte, par exemple à mi-hauteur de la porte, en dessous d'une vitre latérale, comme le propose le document US-A-4,670,819.

De tels dispositifs d'éclairage, généralement rapportés, peuvent avoir un effet extrêmement défavorable sur l'esthétique de l'habitacle du véhicule automobile.

En outre, les moyens d'éclairage disposés à mi-hauteur de l'habitacle, par exemple sur les portes avant, sont directement visibles par le conducteur ou les passagers du véhicule automobile dont les yeux reçoivent directement les rayons lumineux provenant des moyens d'éclairage, de sorte qu'ils peuvent être soumis à un éblouissement au moins passager.

Les parois délimitant l'habitacle du véhicule automobile sur ses côtés latéraux comportent des éléments de carrosserie qui sont recouverts d'une garniture dirigée vers l'intérieur de l'habitacle qui peut être par exemple en matière plastique ou en cuir. De telles garnitures internes ont été utilisées comme supports de moyens d'éclairage qui ne sont pas parfaitement intégrés à la garniture et qui, de ce fait, sont généralement inesthétiques et inaptes à fournir un éclairage indirect efficace, en particulier pour les fonctions de lecture et d'accueil.

Le but de l'invention est de proposer une garniture interne d'une partie de carrosserie d'un véhicule automobile disposée globalement suivant un premier plan vertical et délimitant latéralement un habitacle du véhicule automobile, ayant une paroi disposée globalement suivant un second plan vertical parallèle au premier plan vertical de la partie de carrosserie et dans laquelle est intégré au moins un moyen d'éclairage intérieur de l'habitacle, cette garniture interne permettant d'obtenir une très bonne esthétique de l'intérieur du véhicule et un éclairage non éblouissant pour le conducteur et les passagers.

Dans ce but, une portion de la paroi de la garniture s'étendant suivant la longueur de la partie de carrosserie dans la direction longitudinale du véhicule automobile et sur une partie de la hauteur de la garniture est inclinée par rapport au second plan vertical de la paroi de la garniture et comporte un bord d'extrémité courbe dans un plan horizontal à peu près à mi-hauteur de l'habitacle, de manière que la garniture ménage un espace interne ayant une ouverture débouchant dans l'habitacle, délimitée par le bord d'extrémité de la portion de la paroi,
et la garniture comporte de plus :
- une plaque transparente sensiblement plane et horizontale disposée suivant l'ouverture dans le plan horizontal, à mi-hauteur de l'habitacle, et
- un ensemble d'éclairage intérieur disposé dans l'espace interne ménagé par la paroi de la garniture comportant au moins une source lumineuse et des moyens de transmission de la lumière de la source lumineuse à travers la plaque transparente, dans une zone de l'habitacle située entièrement en dessous du plan horizontal sensiblement à mi-hauteur de l'habitacle.

Selon des caractéristiques plus particulières qui peuvent être prises isolément ou en combinaison :
- la source lumineuse comporte au moins une diode émettrice de lumière à forte puissance et un moyen d'émission et de diffusion de lumière ;
- les moyens de transmission de la lumière de la source lumineuse à travers la plaque transparente vers l'habitacle comportent un réflecteur (21) et un diffuseur tel qu'une lentille ;
- l'ensemble d'éclairage intérieur comporte un conducteur de lumière fixé, dans une disposition parallèle à la plaque transparente, sur une face de la plaque transparente dirigée vers l'espace interne, s'étendant suivant la longueur de la plaque transparente dans la direction longitudinale du véhicule automobile et reliée à ses extrémités longitudinales à des diodes émettrices de lumière ;
- la portion de la paroi de la garniture inclinée par rapport au plan vertical de la paroi présente la forme d'une visière courbe en saillie vers l'intérieur de l'habitacle du véhicule automobile ayant un bord d'extrémité inférieur courbe en saillie vers l'intérieur de l'habitacle du véhicule automobile par rapport au plan vertical suivant lequel est disposée la paroi de la garniture interne ;
- la portion de la paroi de la garniture constitue le fond d'une dépression de la garniture interne en avancée vers l'extérieur de l'habitacle du véhicule automobile et comporte un bord d'extrémité courbe en retrait par rapport au plan vertical général de la paroi de la garniture vers l'extérieur de l'habitacle du véhicule automobile.

Afin de bien faire comprendre l'invention, on va décrire à titre d'exemple, en se référant aux figures jointes en annexe, une garniture interne d'une porte avant et une garniture interne d'une paroi arrière d'un véhicule automobile de type cabriolet.

La figure 1 est une vue en perspective partiellement éclatée de l'habitacle du véhicule automobile.

La figure 2 est une vue en coupe verticale d'un panneau de porte avant du véhicule automobile.

La figure 3 est une vue en coupe verticale transversale à plus grande échelle de la partie supérieure du panneau de porte du véhicule automobile.

La figure 4 est une vue de dessous de la partie supérieure du panneau de porte du véhicule automobile, suivant 4 de la figure 3.

La figure 5 est une vue en coupe verticale transversale de la partie supérieure d'un panneau de porte de véhicule automobile suivant une variante de réalisation.

La figure 6 est une vue en coupe transversale verticale de la partie supérieure d'une paroi latérale fixe de l'habitacle du véhicule automobile.

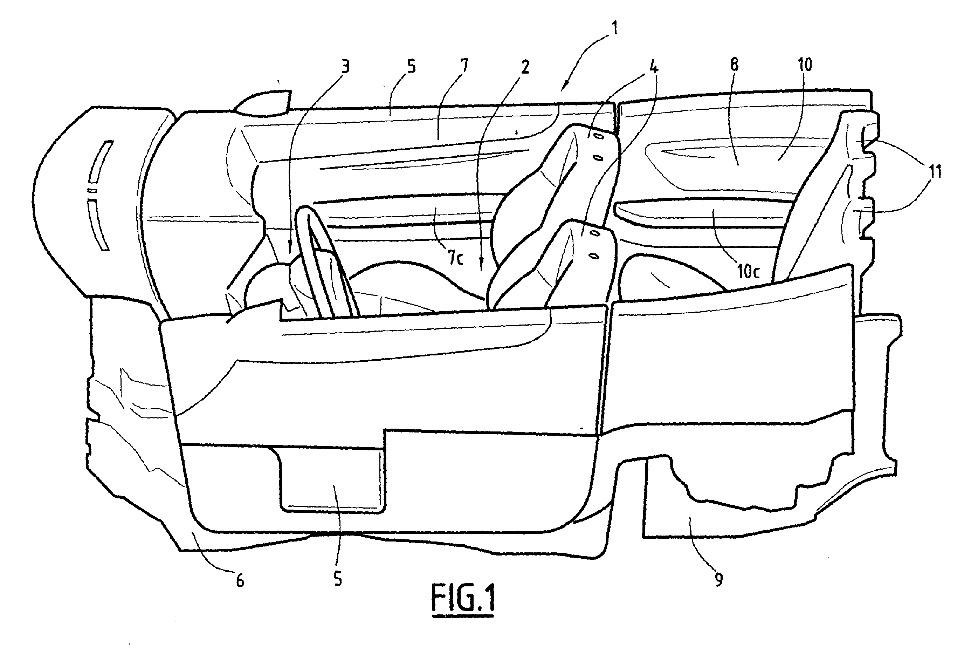

Sur la figure 1, on a représenté l'habitacle 2 d'un véhicule automobile désigné dans son ensemble par le repère 1. Le véhicule automobile 1 peut être un cabriolet ou un véhicule convertible coupé-cabriolet.

L'habitacle 2 du véhicule automobile comporte une partie avant dans laquelle est disposé le poste de conduite 3 et deux sièges avant 4 pour le conducteur du véhicule et un passager avant. La partie avant de l'habitacle est délimitée latéralement par deux portes avant 5 disposées respectivement à gauche, du côté du conducteur et à droite, du côté du passager. Chacune des portes 5 comporte une partie en tôle constituant une partie de la carrosserie du véhicule automobile 1 et une garniture qui peut être en matière plastique ou en cuir.

La porte de gauche du véhicule automobile a été représentée en perspective éclatée, de manière à rendre visible la structure de la porte 5. La tôle de carrosserie 6 est recouverte du côté de l'intérieur de l'habitacle 2, par une garniture 7 qui peut être réalisée par exemple en matière plastique et/ou en cuir.

La partie arrière de l'habitacle comporte en particulier deux parois latérales fixes 8 comprenant une tôle de carrosserie 9 et une garniture interne 10 disposée du côté intérieur de l'habitacle. Des sièges de passagers 11 sont disposés à l'arrière de l'habitacle.

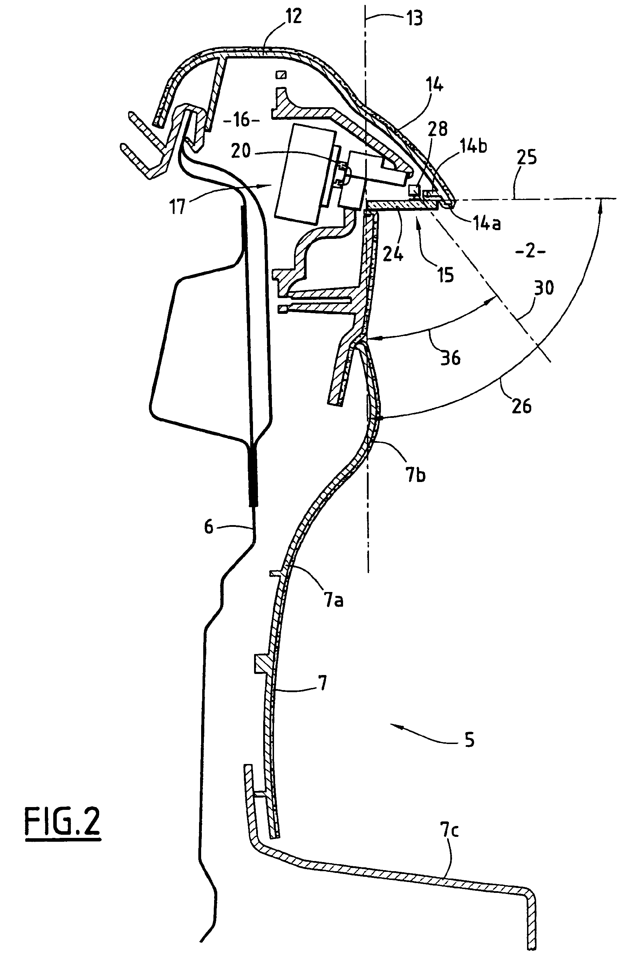

Comme il est visible sur la figure 2, le panneau de la porte 5 comporte la partie en tôle 6 de la porte qui constitue un élément de carrosserie du véhicule automobile disposé globalement suivant un plan vertical et la garniture interne 7 fixée sur la tôle de carrosserie 6, dans une disposition généralement parallèle au plan suivant lequel est disposée la tôle 6. Le panneau de la porte 5 représenté sur la figure 2 s'étend depuis le plancher de l'habitacle, jusqu'à un niveau intermédiaire entre le plancher et le plafond de l'habitacle, ce niveau intermédiaire étant situé en dessous de la position moyenne des yeux des utilisateurs du véhicule lorsqu'ils sont assis sur les sièges à l'intérieur de l'habitacle.

La partie supérieure des portes 5 du véhicule automobile non représentée sur les figures est constituée principalement par une vitre latérale s'étendant jusqu'à la partie supérieure de la carrosserie ou pavillon du véhicule automobile.

Par la suite, on assimilera le niveau de la partie supérieure de la garniture 7 des portes 5 ou de la garniture 10 des parois arrière 8 de l'habitacle au niveau médian ou mi-niveau de l'habitacle, bien que la partie supérieure de la garniture et de la tôle de carrosserie située en dessous d'une vitre latérale ne soit pas située généralement à un niveau parfaitement équidistant du plancher et du plafond de l'habitacle du véhicule automobile.

De plus, comme il est visible sur la figure 2, le panneau de garniture 7a ne présente pas généralement une forme parfaitement plane et n'est pas disposé parfaitement suivant un plan vertical. En particulier, comme il est visible sur la figure 2, la partie supérieure du panneau de garniture 7 et la partie inférieure peuvent être dans des dispositions décalées dans la direction transversale, un accoudoir 7c étant prévu à mi-hauteur, entre la partie supérieure et la partie inférieure du panneau de garniture 7.

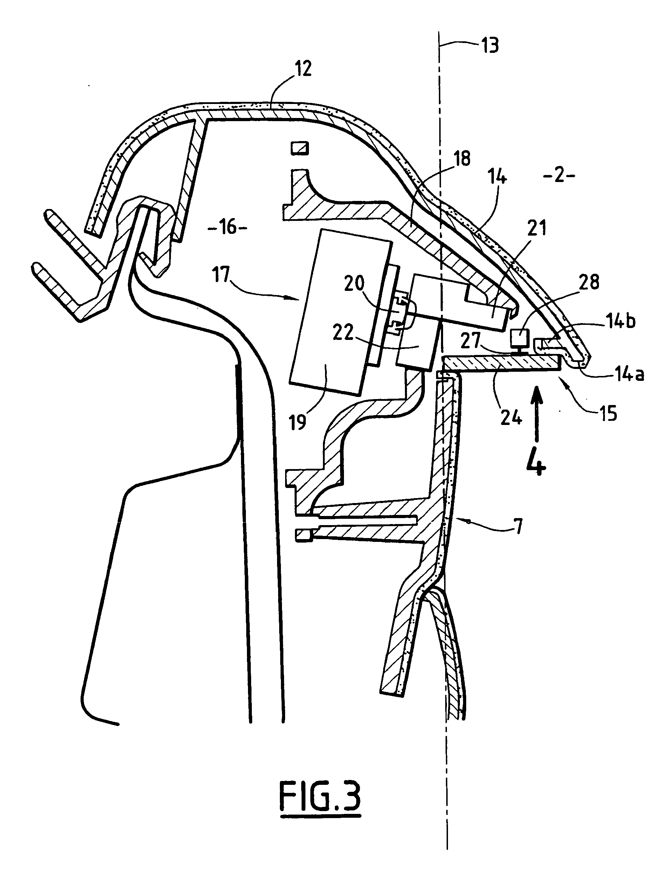

Comme il est visible sur les figures 2 et 3, la partie supérieure de la garniture 7 présente la forme d'un rebord arrondi 12 dirigé transversalement vers l'extérieur et comportant, dans sa partie interne, des moyens d'accrochage sur la partie d'extrémité de l'élément en tôle 6 de la porte 5.

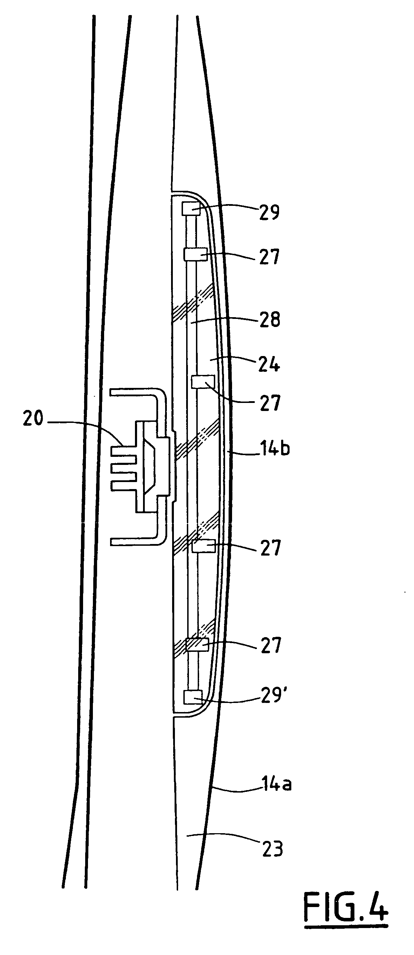

La paroi de la garniture 7 comporte, en dessous du rebord d'extrémité supérieur 12, une portion 14 courbe, inclinée par rapport à un plan vertical 13 suivant lequel est disposée globalement la partie supérieure de la paroi de la garniture 7, en saillie vers l'intérieur de l'habitacle sur une certaine distance dans la direction transversale. La portion 14 du panneau de garniture 7 en saillie vers l'intérieur de l'habitacle s'étend sur une certaine longueur suivant la direction longitudinale de la porte 5 du véhicule automobile et comporte un bord d'extrémité inférieur courbe 14a, comme il est visible sur la figure 4 représentant une vue de dessous suivant 4 des figures 2 et 3.

Entre le bord d'extrémité 14a de la portion 14 du panneau 7 en saillie vers l'intérieur et la partie du panneau de garniture 7 disposée sensiblement suivant le plan vertical 13, est ménagée une ouverture 15.

La portion 14 du panneau de garniture 7 et le rebord supérieur 12 du panneau de garniture 7 ménagent un espace interne 16 dans le panneau de porte, entre la paroi de la garniture 7 et la partie en tôle métallique 6 de la porte, cet espace interne 16 communiquant avec l'espace interne de l'habitacle, par l'intermédiaire de l'ouverture 15.

Comme il est visible en particulier sur la figure 3, un ensemble d'éclairage qui sera désigné de manière générale par le repère 17 est monté à l'intérieur de l'espace 16 dans la partie supérieure de la garniture 7.

L'ensemble d'éclairage 17 comporte un boîtier support 18 fixé à l'intérieur de la garniture dans lequel sont montés les éléments de l'ensemble d'éclairage assurant l'éclairage de lecture et d'accueil.

Ces éléments d'éclairage comportent une source de lumière 20 fixée sur un bloc refroidisseur 19 et des moyens 21 et 22 réflecteurs et diffuseurs de la lumière émise par la source 20.

De préférence, la source de lumière 20 est constituée par une diode émettrice de lumière (LED) associée à un élément luminescent et de diffusion de la lumière disposé de manière adjacente au moyen réflecteur de lumière 21 et au moyen diffuseur de lumière 22, de manière à émettre un faisceau lumineux d'amplitude et de direction adéquates pour assurer les fonctions d'éclairage de lecture et d'accueil.

La source lumineuse 20 peut être en particulier constituée par un dispositif LUXEON (marque déposée de la société LUMILEDS).

Un tel moyen d'éclairage présente des avantages substantiels par rapport à une ampoule à incandescence.

A puissance et intensité lumineuse égales, un tel dispositif à diode présente un encombrement très sensiblement inférieur à une ampoule et produit moins de chaleur qu'une ampoule.

Toutefois, dans certaines applications, la source lumineuse 20 pourrait être une ampoule à incandescence de type classique.

La source lumineuse 20 est alimentée de manière habituelle par la batterie du véhicule automobile.

Le refroidisseur 19 est un refroidisseur à lamelles métalliques permettant d'évacuer la chaleur émise par la source lumineuse 20 par l'intermédiaire de lamelles métalliques de refroidissement en contact avec l'air ambiant.

Le dispositif de diffusion de lumière 22 peut être une lentille, par exemple une lentille sphérique et le réflecteur 21 peut comporter des éléments réfléchissants tels que des miroirs ou des prismes.

Comme il est visible sur les figures 3 et 4, la portion 14 de la paroi de la garniture 7 en saillie vers l'intérieur de l'habitacle 2, en forme de visière courbe, comporte, dans sa partie d'extrémité interne adjacente au rebord courbe 14a, un rebord d'appui et de fixation 14b solidaire de la partie centrale d'une paroi 23 de fermeture de l'ouverture de passage 15 entre l'espace interne 16 et l'habitacle 2 s'étendant entre le rebord d'extrémité 14a de la portion en saillie 14 et la paroi sensiblement verticale disposée suivant le plan vertical 13, de la paroi de la garniture 7.

La paroi horizontale 23 fermant l'ouverture de passage 15 ménage, dans sa partie centrale délimitée par le rebord de montage 14b, une lumière dans laquelle est montée une plaque transparente 24 disposée sensiblement suivant le plan horizontal de l'ouverture 15 et fixée sur le rebord de montage 14b.

La plaque transparente 24 peut être réalisée en une matière plastique transparente assurant le passage de la lumière émise par la source lumineuse 20 diffusée par le diffuseur 22 et réfléchie par le réflecteur 21, sous la forme d'un faisceau ayant un angle d'ouverture dans le plan horizontal de la plaque transparente 24, peu inférieur à 180° et un angle de l'ordre de 90° dans le plan vertical, comme représenté sur la figure 2.

Le faisceau lumineux émis par la source 20 et traversant la plaque 24 assure l'éclairage de lecture et d'accueil.

On a représenté sur la figure 2 la trace 25 d'un plan horizontal passant par l'extrémité 14a de la portion en saillie 14 de la paroi de la garniture 7 qui est situé sensiblement à mi-niveau à l'intérieur de l'habitacle 2 du véhicule automobile.

Le faisceau lumineux émis par la source 20 qui est diffusé et réfléchi à travers la plaque transparente 24 présente une surface limite supérieure sensiblement plane qui est disposée suivant le plan de trace 25 ou légèrement inclinée vers le bas, en dessous du plan horizontal 25.

Sur la figure 2, on a représenté un faisceau lumineux de lecture et d'accueil d'une amplitude de l'ordre de 90° dans le plan vertical de la figure (représentée par la double flèche 26) dont la limite supérieure se situe dans le plan horizontal 25 à mi-niveau de l'habitacle du véhicule automobile.

Un tel faisceau lumineux permet d'éclairer efficacement l'habitacle du véhicule automobile dans une zone de lecture située sensiblement en dessous des yeux des occupants des sièges du véhicule, de sorte que les occupants et en particulier le conducteur ne peuvent être éblouis par l'éclairage de lecture.

Lors de l'ouverture d'une porte 5 du véhicule automobile, le faisceau lumineux émis par la source 20 permet d'éclairer le bas de caisse du véhicule automobile et une partie au moins du siège située au voisinage de la porte.

Sur la plaque transparente 24, sont prévus, des plots 27 (voir figure 4) pour la fixation d'un conducteur de lumière 28 relié à ses extrémités à des diodes émettrices de lumière 29 et 29'.

Le conducteur de lumière 28 peut être constitué par un tube en matière plastique transparente.

La matière plastique transparente de la plaque 24 et du conducteur de lumière 28 peut être le polyméthylmétacrylate (PMMA).

Le conducteur de lumière 28 associé aux diodes émettrices 29 et 29' assure l'éclairage d'ambiance de l'habitacle du véhicule automobile.

Les diodes émettrices de lumière 29 et 29' ont une puissance et une intensité lumineuse sensiblement inférieure à celle de la source lumineuse 20, de manière à assurer un éclairage d'ambiance très doux (éventuellement en lumière colorée) à l'intérieur de l'habitacle, par l'intermédiaire du conducteur de lumière 28 fixé dans une disposition parallèle au-dessus de la plaque transparente 24, suivant toute sa longueur, à l'intérieur de l'espace interne 16 de la garniture 7.

Le conducteur de lumière 28 est disposé, par rapport au rebord 14b et à l'extrémité 14a de la portion de paroi en saillie 14, de telle sorte que l'éclairage d'ambiance soit réalisé sous la forme d'un faisceau lumineux en forme de dièdre délimité entre la paroi verticale de la garniture 7 (plan vertical 13) et un plan incliné par rapport au plan vertical 13 représenté par sa trace 30 sur la figure 2. L'amplitude du faisceau d'éclairage d'ambiance représenté par la double flèche 36 est sensiblement inférieure à 90°, de sorte que le plan de trace 30 délimitant le faisceau d'éclairage d'ambiance à sa partie supérieure se trouve en dessous du plan horizontal 25.

Les faisceaux d'éclairage de lecture et d'accueil et d'éclairage d'ambiance sont donc limités à la zone de l'habitacle située en dessous du plan horizontal 25 à mi-niveau de l'habitacle, de sorte que les occupants du véhicule automobile échappent à tout risque d'éblouissement.

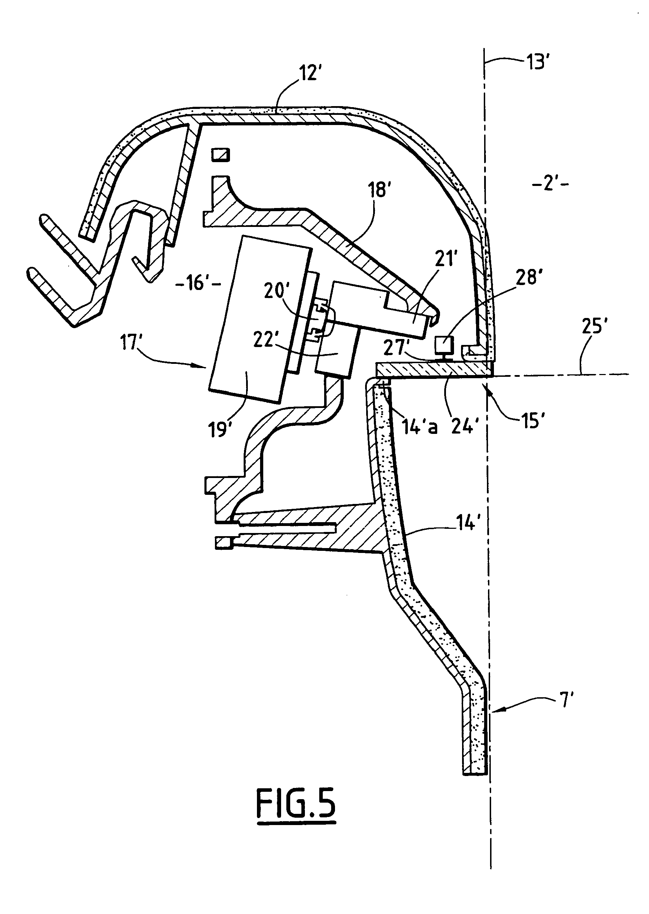

Sur la figure 5, on a représenté une variante d'une garniture interne selon l'invention qui peut être fixée par exemple sur une porte de véhicule automobile.

La garniture 7' est disposée globalement suivant un plan vertical 13' parallèle à la partie de carrosserie en tôle sur laquelle est fixée la garniture 7'.

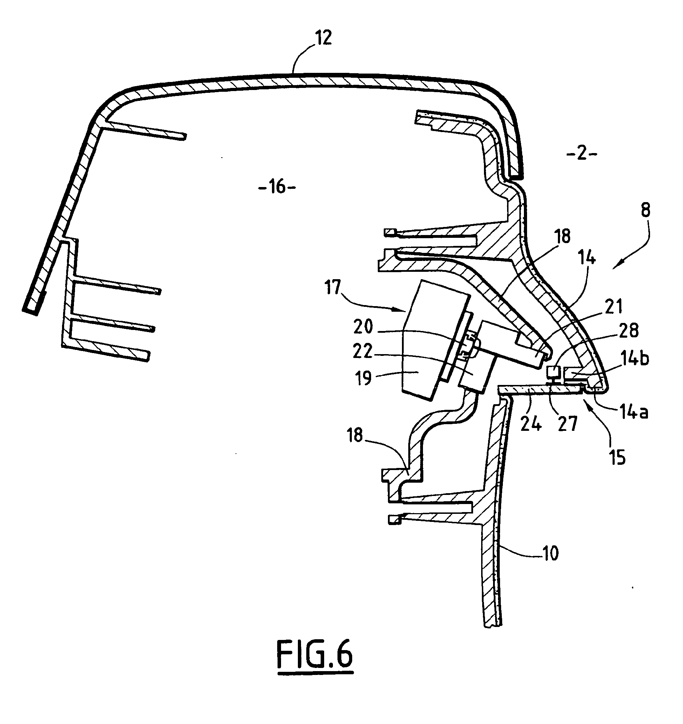

Dans sa partie supérieure représentée sur la figure 6, la garniture 7' comporte une dépression dont le fond est une portion de paroi 14' dans une disposition inclinée par rapport au plan vertical 13' de la paroi 7', en direction de la partie externe de la porte du véhicule et délimitée par un rebord d'extrémité 14'a en retrait par rapport au plan vertical 13 vers l'extérieur de l'habitacle 2 du véhicule automobile. La portion de paroi 14' de la garniture 7' s'étend suivant la longueur de la portière et sur une partie de la hauteur de la garniture 7' et le bord d'extrémité 14'a de forme courbe de la portion de paroi 14' s'étend dans un plan horizontal de trace 25' situé sensiblement à mi-hauteur de l'habitacle du véhicule automobile.

Le rebord supérieur 12' de la garniture 7' au-dessus du plan 25' délimite un espace interne 16' dans lequel est monté l'ensemble d'éclairage 17' comportant une source lumineuse 20' permettant d'assurer l'éclairage de lecture et d'ambiance, à travers une plaque transparente 24' disposée suivant le plan horizontal 25', de manière à couvrir une ouverture 15' entre la partie supérieure de la garniture 7' au-dessus du plan 25' et le bord d'extrémité supérieur 14'a de la portion de paroi 14' en retrait vers l'extérieur de la porte.

La réalisation et le fonctionnement de l'ensemble d'éclairage 17' sont analogues à la réalisation et au fonctionnement de l'ensemble d'éclairage 17 qui a été décrit précédemment. Le faisceau d'éclairage de lecture et d'accueil est délimité par une surface plane supérieure située suivant le plan 25' ou en dessous du plan 25' et la plaque 24' porte un conducteur de lumière 28' relié à des diodes pour réaliser un éclairage d'ambiance dans l'habitacle du véhicule automobile.

Sur la figure 6, on a représenté une seconde variante d'une garniture interne suivant l'invention qui est adaptée au recouvrement interne d'une paroi latérale fixe du véhicule automobile telle que la paroi 8 représentée sur la figure 1, à l'arrière de l'habitacle.

La garniture interne 10 est réalisée en plusieurs parties et comporte une partie supérieure 12 et une portion 14 en saillie vers l'intérieur de l'habitacle 2 du véhicule fixées l'une sur l'autre et délimitant l'espace interne 16 dans lequel est monté le boîtier 18 de l'ensemble d'éclairage 17 assurant l'éclairage de l'habitacle 2 à travers la plaque transparente 24 disposée suivant l'ouverture 15 entre la portion en saillie 14 et une partie sensiblement verticale de la paroi de la garniture interne 10. Le fonctionnement du système d'éclairage de lecture et d'accueil ou d'ambiance est analogue au fonctionnement du système d'éclairage d'une porte du véhicule automobile qui a été décrit plus haut.

Les moyens d'éclairage de lecture et d'ambiance permettent en particulier aux passagers du véhicule automobile, à l'avant et à l'arrière de disposer d'un éclairage permanent d'un accoudoir tel que l'accoudoir 7c de la portière 5 (figure 2) ou un accoudoir 10c solidaire de la garniture interne de la paroi 8 à l'arrière du véhicule automobile sur lequel peuvent être prévus différents équipements tels que des boutons de commande (par exemple d'ouverture de vitres) ou des porte-gobelets.

L'éclairage intérieur du véhicule automobile est donc réalisé de manière à assurer les fonctions de lecture et d'accueil et d'éclairage d'ambiance, sans aucun risque d'éblouissement des passagers du véhicule automobile. L'éclairage d'accueil permet d'éclairer la zone de montée dans le véhicule automobile sans nécessiter de moyen d'éclairage dans la partie inférieure des portes du véhicule automobile.

Les moyens d'éclairage sont parfaitement dissimulés dans la garniture interne suivant l'invention dont l'aspect esthétique est ainsi parfaitement sauvegardé.

De plus, l'espace interne réservé pour l'ensemble d'éclairage est totalement fermé, de sorte que l'ensemble d'éclairage est à l'abri de risques de détériorations ou d'encrassement pendant l'utilisation du véhicule automobile.

Les moyens d'éclairage peuvent être commandés par des moyens de commande centralisée placés dans une zone de l'habitacle, facilement accessible et/ou par des interrupteurs ou contacteurs placés sur les portes ou les parois latérales fixes du véhicule.

L'invention ne se limite pas strictement aux modes de réalisation qui ont été décrits.

C'est ainsi que la portion de la garniture interne placée dans une disposition inclinée par rapport au plan vertical de l'élément de carrosserie du véhicule automobile peut présenter une forme quelconque plane ou courbe et se trouver, soit en saillie vers l'intérieur de l'habitacle, soit en saillie vers l'extérieur du véhicule automobile. Dans tous les cas, on préserve l'esthétique de la garniture interne, soit en prévoyant une portion de la paroi de la garniture de forme courbe légèrement en saillie (par exemple sur une longueur de 20 mm) vers l'intérieur de l'habitacle, à la partie supérieure de la paroi, soit en prévoyant une légère dépression de la paroi de la garniture à sa partie supérieure en dessous du plan horizontal à mi-niveau de habitacle.

Les moyens d'éclairage utilisés pour l'éclairage de lecture et d'accueil et pour l'éclairage d'ambiance peuvent être différents de ceux qui ont été décrits.

L'invention s'applique non seulement aux véhicules automobiles de type cabriolet ou convertibles coupé-cabriolet mais encore aux véhicules de type berline ou monospace.

## Revendications

1. Garniture interne d'une partie (5, 8) de la carrosserie d'un véhicule automobile disposée globalement suivant un premier plan vertical et délimitant latéralement un habitacle (2) du véhicule automobile (1), ayant une paroi disposée sensiblement suivant un second plan vertical (13, 13') parallèle au premier plan vertical de la partie de carrosserie (5, 8) et dans laquelle est intégré au moins un moyen d'éclairage intérieur (17) de l'habitacle (2), **caractérisée par le fait qu'**une portion (14, 14') de la paroi de la garniture (7, 10) s'étendant suivant la longueur de la portion de carrosserie (5, 8) dans la direction longitudinale du véhicule automobile (1) et sur une partie de la hauteur de la garniture (7, 10) est inclinée par rapport au second plan vertical (13, 13') de la paroi de la garniture (7, 7', 10) et comporte un bord d'extrémité courbe (14a, 14'a) dans un plan horizontal (25, 25') à peu près à mi-hauteur de l'habitacle (2), de manière que la paroi (7; 7', 10) ménage un espace interne (16, 16') de la garniture (7, 7', 10) ayant une ouverture (15, 15') débouchant dans l'habitacle (2), délimité par le bord d'extrémité (14, 14'a),
et qu'elle comporte de plus :
- une plaque transparente (24, 24') sensiblement plane et horizontale disposée suivant l'ouverture dans le plan horizontal (25, 25') à mi-hauteur de l'habitacle (2) et
- un ensemble d'éclairage intérieur (17, 17') disposé dans l'espace interne (16, 16') de la paroi de la garniture (7, 7', 10) comportant au moins une source lumineuse (20, 20') et des moyens (21, 22) de transmission de la lumière de la source lumineuse (20, 20') à travers la plaque transparente (24), dans une zone de l'habitacle (2) située entièrement en dessous du plan horizontal (25, 25') à mi-hauteur de l'habitacle (2).

2. Garniture interne suivant la revendication 1, **caractérisée par le fait que** la source lumineuse (20, 20') comporte au moins une diode émettrice de lumière à forte puissance et un moyen d'émission et de diffusion de lumière.

3. Garniture interne suivant l'une quelconque des revendications 1 et 2, **caractérisée par le fait que** les moyens de transmission de la lumière de la source lumineuse (20, 20') à travers la plaque transparente (24, 24) vers l'habitacle (2) comportent un réflecteur (21) et un diffuseur tel qu'une lentille (22).

4. Garniture interne suivant l'une quelconque des revendications 1 à 3, **caractérisée par le fait que** l'ensemble d'éclairage intérieur (17, 17') comporte un conducteur de lumière (28, 28') fixé, dans une disposition parallèle à la plaque transparente (24, 24'), sur une face de la plaque transparente (24, 24') dirigée vers l'espace interne (16, 16'), s'étendant suivant la longueur de la plaque transparente (24, 24') dans la direction longitudinale du véhicule automobile et reliée à ses extrémités longitudinales à des diodes émettrices de lumière (29, 29').

5. Garniture interne suivant l'une quelconque des revendications 1 à 4, **caractérisée par le fait que** la portion (14, 14') de la paroi de la garniture (7, 7', 10) inclinée par rapport au plan vertical (13, 13') de la paroi présente la forme d'une visière courbe en saillie vers l'intérieur de l'habitacle (2) du véhicule automobile (1) ayant un bord d'extrémité inférieur courbe (14a) en saillie vers l'intérieur de l'habitacle (2) du véhicule automobile par rapport au plan vertical (13) suivant lequel est disposée la paroi de la garniture interne (7, 10).

6. Garniture interne suivant l'une quelconque des revendications 1 à 4, **caractérisée par le fait que** la portion (14') de la paroi de la garniture (7') constitue le fond d'une dépression de la garniture interne (7') en avancée vers l'extérieur de l'habitacle (2) du véhicule automobile et comporte un bord d'extrémité courbe (14'a) en retrait par rapport au plan vertical général (13') de la paroi de la garniture (7') vers l'extérieur de l'habitacle (2) du véhicule automobile.

## Claims

1. Interior trim of part (5, 8) of the body of an automotive vehicle disposed overall according to a first vertical plane and laterally delimiting a passenger compartment (2) of the automotive vehicle (1), having a wall disposed substantially according to a second vertical plane (13, 13') parallel to the first vertical plane of the part of body (5, 8) and in which is integrated at least one means of interior lighting (17) of the passenger compartment (2), **characterised by** the fact that a portion (14, 14') of the wall of the trim (7, 10) extending according to the length of the portion of body (5, 8) in the longitudinal direction of the automotive vehicle (1) and on part of the height of the trim (7, 10) is inclined in relation to the second vertical plane (13, 13') of the wall of the trim (7, 7', 10) and includes a curved end edge (14a, 14'a) in a horizontal plane (25, 25') about half-way up the passenger compartment (2), such that the wall (7; 7', 10) provides an internal space (16, 16') of the trim (7, 7', 10) having an opening (15, 15') emerging in the passenger compartment (2), delimited by the end edge (14, 14'a), and which furthermore includes:
- a transparent, substantially flat and horizontal plate (24, 24') disposed according to the opening in the horizontal plane (25, 25') half-way up the passenger compartment (2) and
- an interior lighting assembly (17, 17') disposed in the internal space (16, 16') of the wall of the trim (7, 7', 10) including at least one light source (20, 20') and means (21, 22) of transmission of the light from the light source (20, 20') through the transparent plate (24), in an area of the passenger compartment (2) situated entirely below the horizontal plane (25, 25') half-way up the passenger compartment (2).

2. Interior trim according to claim 1, **characterised by** the fact that the light source (20, 20') includes at least one high power light emitting diode and a means of light emission and diffusion.

3. Interior trim according to any of claims 1 and 2, **characterised by** the fact that the means of transmission of the light from the light source (20, 20') through the transparent plate (24, 24) towards the passenger compartment (2) include a reflector (21) and a diffuser such as a lens (22).

4. Interior trim according to any of claims 1 to 3, **characterised by** the fact that the interior lighting assembly (17, 17') includes a fixed light conductor (28, 28'), in a disposition parallel to the transparent plate (24, 24'), on a face of the transparent plate (24, 24') directed towards the internal space (16, 16'), extending according to the length of the transparent plate (24, 24') in the longitudinal direction of the automotive vehicle and connected at its longitudinal ends to light emitting diodes (29, 29').

5. Interior trim according to any of claims 1 to 4, **characterised by** the fact that the portion (14, 14') of the wall of the trim (7, 7', 10) inclined in relation to the vertical plane (13, 13') of the wall presents the form of a curved visor projecting towards the interior of the passenger compartment (2) of the automotive vehicle (1) having a curved lower end edge (14a) projecting towards the interior of the passenger compartment (2) of the automotive vehicle in relation to the vertical plane (13) according to which the wall of the interior trim (7, 10) is disposed.

6. Interior trim according to any of claims 1 to 4, **characterised by** the fact that the portion (14') of the wall of the trim (7') forms the bottom of a depression of the interior trim (7') forwards towards the exterior of the passenger compartment (2) of the automotive vehicle and includes a curved end edge (14'a) backwards in relation to the general vertical plane (13') of the wall of the trim (7') towards the exterior of the passenger compartment (2) of the automotive vehicle.

## Patentansprüche

1. Innenverkleidung eines Teils (5, 8) der Karosserie eines Kraftfahrzeugs, im Ganzen gemäß einer ersten senkrechten Ebene angeordnet und einen Fahrgastraum (2) des Kraftfahrzeugs (1) seitlich begrenzend, mit einer im Wesentlichen gemäß einer zu der ersten senkrechten Ebene des Karosserieteils (5, 8) parallelen zweiten senkrechten Ebene (13, 13') angeordneten Wand, in die wenigstens eine Innenbeleuchtungseinrichtung (17) des Fahrgastraums (2) integriert ist,
**dadurch gekennzeichnet, dass** ein Abschnitt (14, 14') der Verkleidungswand (7, 10), der sich entsprechend der Länge des Karosserieteils (5, 8) in der Längsrichtung des Kraftfahrzeugs (1) und über einen Teil der Höhe der Verkleidung (7, 10) erstreckt, geneigt ist in Bezug auf die zweite senkrechte Ebene (13, 13') der Verkleidungswand (7, 7', 10) und einen gebogenen Endrand (14a, 14'a) in einer waagrechten Ebene (25, 25') ungefähr auf halber Höhe des Fahrgastraums (2) umfasst, so dass die Wand (7; 7', 10) einen Innenraum (16, 16') der Verkleidung (7, 7', 10) entstehen lässt, mit einer in den durch den Endrand (14, 14'a) begrenzten Fahrgastraum (2) mündenden Öffnung (15, 15'),
und dass sie außerdem umfasst:
- eine im Wesentlichen ebene und waagrechte transparente Platte (24, 24'), angeordnet entsprechend der Öffnung in einer waagrechten Ebene (25, 25') auf halber Höhe des Fahrgastraums (2), und
- ein Innenbeleuchtungssystem (17, 17'), angeordnet in dem Innenraum (16, 16') der Verkleidungswand (7, 7', 10) mit wenigstens einer Lichtquelle (20, 20') und Einrichtungen (21, 22) zur Übertragung des Lichts der Lichtquelle (20, 20') durch die transparente Platte (24) hindurch in eine Zone des Fahrgastraums (2), die sich gänzlich unterhalb der waagrechten Ebene (25, 25') auf halber Höhe des Fahrgastraums (2) befindet.

2. Innenverkleidung nach Anspruch 1, **dadurch gekennzeichnet, dass** die Lichtquelle (20, 20') wenigstens eine Leuchtdiode mit starker Leistung und eine Lichtemissions- und -diffusionseinrichtung umfasst.

3. Innenverkleidung nach einem der Ansprüche 1 und 2, **dadurch gekennzeichnet, dass** die Einrichtungen zur Übertragung des Lichts der Lichtquelle (20, 20') durch die transparente Platte (24, 24) hindurch in Richtung Fahrgastraum (2) einen Reflektor (21) und einen Lichtdiffusor wie etwa eine Linse (22) umfassen.

4. Innenverkleidung nach einem der Ansprüche 1 bis 3, **dadurch gekennzeichnet, dass** das Innenbeleuchtungssystem (17, 17') einen Lichtleiter (28, 28') umfasst, fixiert in einer zu der transparenten Platte (24, 24') parallelen Anordnung, auf einer gegen den Innenraum (16, 16') gerichteten Seite der transparenten Platte (24, 24'), der sich entsprechend der Längsrichtung des Kraftfahrzeugs erstreckt und an seinen Längsenden mit Leuchtdioden (29, 29') verbunden ist.

5. Innenverkleidung nach einem der Ansprüche 1 bis 4, **dadurch gekennzeichnet, dass** der in Bezug auf die zweite senkrechte Ebene (13, 13') geneigte Abschnitt (14, 14') der Verkleidungswand (7, 7', 10), die Form eines in Richtung Inneres des Fahrgastraums (2) des Kraftfahrzeugs (1) vorstehenden bzw. gewölbten Schirms aufweist, mit einem gebogenen unteren Endrand (14a), vorstehend in Richtung Inneres des Fahrgastraums (2) des Kraftfahrzeug in Bezug auf die senkrechte Ebene (13), entsprechend der die Innenverkleidungswand (7, 10) angeordnet ist.

6. Innenverkleidung nach einem der Ansprüche 1 bis 4, **dadurch gekennzeichnet, dass** der Abschnitt (14') der Verkleidungswand (7') den Boden einer in Richtung Außenseite des Fahrgastraums (2) vorspringenden Mulde der Innenverkleidung (7') bildet und einen gebogenen, in Bezug auf die Hauptebene (13') der Verkleidungswand (7') in Richtung Außenseite des Fahrgastraums (2) des Kraftfahrzeugs zurückversetzten Endrand (14'a) umfasst.
